# EUROPÄISCHE PATENTSCHRIFT

(11) **EP 1 004 278 B1**
(45) Veröffentlichungstag und Bekanntmachung des Hinweises auf die Patenterteilung: **03.08.2005**
(21) Anmeldenummer: 99120896.8
(22) Anmeldetag: 28.10.1999
(51) Int. Cl.: A61C 5/00, A61C 13/225

(54) **Keramische Zahnrestauration**
Ceramic dental restoration
Restauration dentaire en céramique

(30) Priorität: 23.11.1998 DE 19853949
(43) Veröffentlichungstag der Anmeldung: 31.05.2000
(73) Patentinhaber: Ivoclar Vivadent AG, 9494 Schaan (LI)
(72) Erfinder: Foser, Hans-Peter, FL 9496 Balzers (LI)
(74) Vertreter: Baronetzky, Klaus, Dipl.-Ing.

(56) Entgegenhaltungen:
- DE-A- 3 930 358
- DE-C- 19 622 522
- DE-U- 9 007 151
- SE-C- 507 543
- US-A- 4 744 757

## Beschreibung

Die Erfindung betrifft eine keramische Zahnrestauration gemäß dem Oberbegriff von Anspruch 1 sowie ein Verfahren zur Herstellung einer keramischen Zahnrestauration gemäß dem Oberbegriff von Anspruch 11.

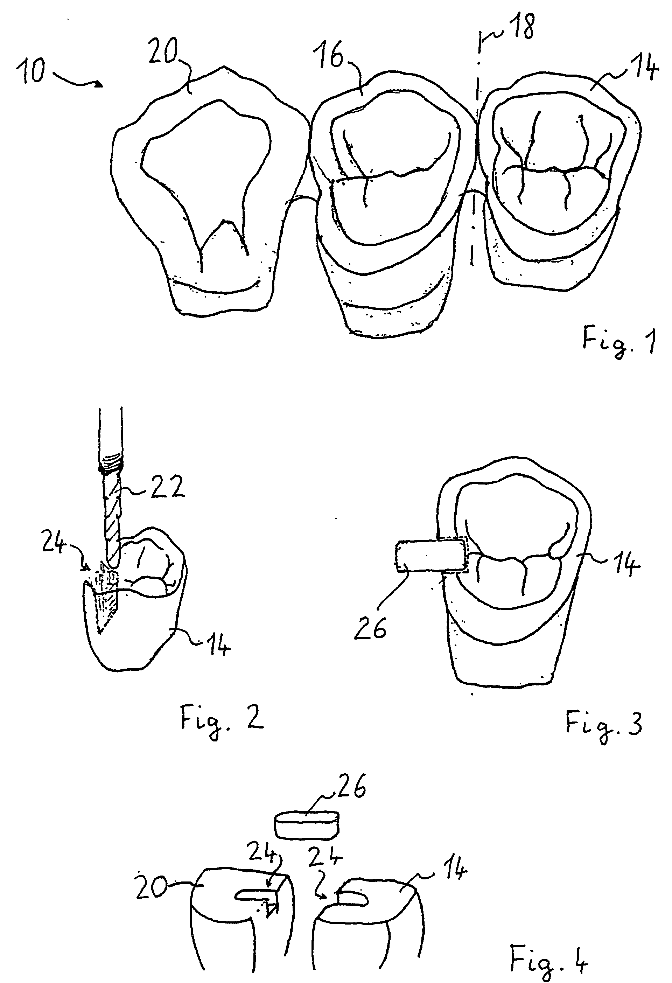

Eine derartige Zahnrestauration ist aus der US-Patentschrift 4,744,757 bekannt. Bei dieser Zahnrestauration wird in der Ausführungsform gemäß Figur 3 ein Verbindungsglied in Ausnehmungen in zwei benachbarte Brückenelemente eingesteckt. Es besteht die Möglichkeit, die Zahnrestauration noch zu bewegen, bevor sie endgültig in ihrer Lage festgelegt wird. Hierzu wird ein Klebematerial oder Zahnzement verwendet, der nach dem Verflüchtigen der dort verwendeten Lösungsmittel aushärtet. Alternativ sollen lichthärtbare Harze verwendet werden, wobei davon ausgegangen wird, daß die für die Herstellung der Zahnrestauration verwendeten Keramiken eine ausreichende Lichtdurchlässigkeit im spektral wichtigen UV-Bereich aufweisen, um eine sichere Lichthärtung zu gewährleisten.

Nachteilig bei dieser Lösung ist jedoch, daß der Grad der Durchhärtung von der verwendeten Keramik abhängt. Die Zahnrestauration sollte sicherheitshalber nur aus einer besonders gut lichtdurchlässigen Glaskeramik hergestellt werden.

Die nach diesem Verfahren hergestellten Zahnrestaurationen haben sich als nicht besonders haltbar herausgestellt. Gerade bei der Verwendung von Dentalzementen traten Risse auf, die möglicherweise auf nicht zusammenpassende Wärmeausdehnungskoeffizienten zurückzuführen sind. Das Dokument DE 3930358 offenbart ein keramische Zahnrestauration gemäß dem Oberbegriff des Anspruchs 1 und ein Verfahren zur Herstellung einer keramischen Zahnrestauration gemäß dem Oberbegriff des Anspruchs 11.

Demgegenüber liegt der Erfindung die Aufgabe zugrunde, eine Zahnrestauration gemäß dem Oberbegriff von Anspruch 1 sowie ein Verfahren zur Herstellung einer Zahnrestauration gemäß dem Oberbegriff von Anspruch 11 zu schaffen, die eine langzeitstabile und verläßliche Verbindung zwischen Kronen- oder Brückenelementen bietet, ohne die freie Einstellbarkeit zu beeinträchtigen.

Diese Aufgabe wird erfindungsgemäß durch Anspruch 1 gelöst. Vorteilhafte Weiterbildungen ergeben sich aus den Unteransprüchen.

Überraschend führt die erfindungsgemäße Einsinterung der Verbindungsglieder über Glaspulver-Pasten bzw. -Aufschlämmungen zu einer dauerhaften und insbesondere nicht zur Rißbildung neigenden Zahnrestauration. Die für das Sintern verwendeten Glasmassen können ohne weiteres so ausgewählt werden, daß ihre Wärmeausdehnungskoeffizienten zumindest in der Nähe derjenigen der verwendeten Keramik liegen. Wenn beispielsweise eine Lithiumdisilicatkeramik mit einem Wärmeausdehnungskoeffizienten von 10,8 x 10⁻⁶/K verwendet wird, kann ohne weiteres eine Lithiumdisilicat-Glasmasse als Sintermaterial verwendet werden. Durch das Einbrennen der Verbindungsglieder in die Kronen oder Brücken entsteht eine besonders gut ausgesteifte Verbindung, wobei durch die Wahl der Brenntemperatur sichergestellt werden kann, daß nicht die Keramikmasse selbst ihre Festigkeit verliert. Für das Einsintern sind Temperaturen im Bereich zwischen 600 und 800°C bevorzugt.

Vollkeramische Brückenrekonstruktionen müssen nach heutigem Stand der Technik bei Passungsproblemen grundsätzlich neu gefertigt werden, da es kein adäquate Keramik-Fügetechnik gibt. Bei der vorliegenden Erfindung ist eine Wiederholung der aufwendigen Vollkeramikrestauration hinfällig und hat zudem kein Kunststoffflicken zur Folge.

Gemäß einem besonders günstigen Aspekt der Erfindung läßt sich eine stabile und dauerhafte Brücke auch dann herstellen, wenn die Seitenwände der Zahnrestauration recht dünn sind. Hierzu wird dann das erfindungsgemäße Verbindungsglied in den Bereich der Kaufläche verlegt und praktisch als eine Art Plättchen von oben eingelegt und dann gebrannt. Es versteht sich, daß die Wahl der Länge und Abmessungen des Verbindungsglieds in weiten Bereichen an die Erfordernisse angepaßt werden kann.

Auch die Form und Ausgestaltung des Verbindungsglieds kann in weiten Bereichen an die Erfordernisse angepaßt werden. Gerade wenn das Verbindungsglied sich im Bereich der Kauflächen erstreckt, kann eine längliche und flache Ausgestaltung eine besonders stabile Verankerung bieten. Anstelle von stabförmigen Verbindungsgliedern können auch knochenförmige Verbindungsglieder eingesetzt werden, wobei je ein Spiel zwischen den Ausnehmungen und dem Verbindungsglied vorgesehen ist, um die Glaspaste oder -aufschlämmung aufnehmen zu können.

Die Größe des Übermasses der Ausnehmungen gegenüber den Verbindungsgliedern kann in weiten Bereichen an die Erfordernisse angepaßt werden. So ist es beispielsweise möglich, einen Spalt von beispielsweise 1/10 der Stärke des Verbindungsglieds vorzusehen, der vollständig von Glas-Sintermasse ausgefüllt wird.

Das Ausfüllen kann entweder dadurch erfolgen, daß die Ausnehmungen mit Glaspulverpaste oder -aufschlämmung gefüllt werden, oder bevorzugt, indem die Verbindungsglieder in die Glaspulverpaste oder -aufschlämmung eingetaucht und dann in die Ausnehmungen in den Kronen- oder Brückenelementen eingesetzt werden.

Nach dem Einsetzen wird die Brücke oder Krone in das Modell oder in den Mund des Patienten eingeführt, und es wird die korrekte Positionierung festgelegt. Durch geeignete mechanische Maßnahmen, wie beispielsweise Klammern, Fixiergips oder Kunststoff, wird nun die Geometrie stabilisiert, und in dieser Form wird die Zahnrestauration in einem kurzen Brennprozeß nachgesintert, so daß die Verbindungsglieder sich intensiv in den Ausnehmungen festsetzen und eine auch langzeitstabile Verankerung gewährleistet ist.

Weitere Einzelheiten, Vorteile und Merkmale ergeben sich aus der nachfolgenden Beschreibung eines Ausführungsbeispiels anhand der Zeichnungen.

Es zeigen:
- Fig. 1: eine schematisierte perspektivische Ansicht einer Brücke für die Verwendung im Rahmen eines erfindungsgemäßen Verfahrens;
- Fig. 2: eine perspektivische Ansicht einer Krone oder eines Brückenelements nach Abtrennung aus der Brücke gemäß Fig. 1;
- Fig. 3: eine perspektivische Ansicht des Brückenelements gemäß Fig. 2, wobei das Verbindungsglied einseitig eingesetzt ist; und
- Fig. 4: eine weitere Ausführungsform einer erfindungsgemäßen Zahnrestauration mit einer modifizierten Ausführungsform des Verbindungsglieds.

In dem hier dargestellten Ausführungsbeispiel ist eine Brücke 10 als Zahnrestauration vorgesehen, die zwischen einer Krone 14 und einem Brückenzahn 16 entlang einer Trennlinie 18 getrennt wird. Die Verbindung zwischen dem Brückenzahn 16 und einer weiteren Krone 20 verbleibt hingegen ungetrennt; für die optimale Ausrichtung ist es ausreichend, wenn lediglich eine Trennung pro Brücke erfolgt.

Die Brücke 10 besteht in dem hier beschriebenen bevorzugten Ausführungsbeispiel aus einer Lithiumdisilicatkeramik, wobei voll inhaltlich auf die DE-OS 197 50 794 Bezug genommen wird. Der Wärmeausdehnungskoeffizient dieser Keramik liegt bei 10,8 x 10⁻⁶/K im Bereich zwischen 100 und 500°C.

Nach dem Trennen wird gemäß Fig. 2 mit einem Bohrer oder Fräser 22 eine Ausnehmung 24 hergestellt. Die Ausnehmung 24 ist etwas größer dimensioniert als ein aus Fig. 3 ersichtliches Verbindungsglied 26. Eine entsprechende Ausnehmung wird sowohl in der Krone 14 als auch in dem Brückenzahn 16 hergestellt, wobei in dem dargestellten Ausführungsbeispiel die Ausnehmung sich im medial/distalen Wandbereich der Krone erstreckt.

Für die Verbindung wird eine vorbereitete Lot-Glaspaste eingesetzt. In dem bevorzugten Ausführungsbeispiel wird ein "low fusing glass" mit einem Wärmeausdehnungskoeffizienten von 0,8 - 10 x 10⁻⁶/K bei 100 bis 500°C gemahlen. Dieses Glas hat einen Sinterbereich zwischen 690 und 740°C und die durch das Mahlen angestrebte Korngröße ist kleiner als 100 µm. Die Glassubstanz wird mit einem schwerflüchtigen Lösemittel zu einer Paste vermischt. Polyethylenglykol 425 oder Ethylenglykol sind dafür besonders geeignet.

Als Verbindungsglied 26 wird bevorzugt ein Stift aus einem besonders steifen Material wie Zr0₂ eingesetzt. Der Stift wird entweder vorkonfektioniert hergestellt oder auf die gewünschte Länge zugeschnitten oder gebrochen.

Vor dem Einsetzen der Zahnrestauration in den Mund des Patienten oder in das Modell wird das Verbindungsglied 26 mit der vorbereiteten Glaspaste eingestrichen und in die präparierten Ausnehmungen eingesetzt, so daß ein Überschuß der Glaspaste herausquillt. Der Überschuß wird entfernt und die Passung vorgenommen.

Sobald die Passung festliegt, wird die Geometrie der Brücke zusätzlich stabilisiert. Zwar ist die Paste relativ viskos, so daß für eine Änderung der relativen Ausrichtung der Brückenelemente zueinander eine gewisse Kraft überwunden werden muß. Es ist jedoch günstig und bevorzugt, wenn hier eine geometrische Aussteifung, beispielsweise mit einer hierfür geeigneten Klammer oder Lötmasse, vorgenommen wird.

Die in ihrer Ausrichtung fixierte Brücke 10 wird dann erneut entnommen und zusammen mit dem Verbindungsglied 26 in einen Keramikbrennofen eingesetzt. Beispielhaft kann ein Keramikbrennofen der vorliegenden Anmelderin, nämlich das Modell "Programat", eingesetzt werden.

Innerhalb von 30 Minuten wird die Temperatur in dem Keramikbrennofen auf 690°C gebracht, und für eine Minute dort gehalten. Innerhalb von 10 Minuten wird dann erneut auf Raumtemperatur abgekühlt.

Bevorzugt ist es erfindungsgemäß, daß die verwendete Glas-Aufschlämmung einen Sinterpunkt aufweist, der deutlich unter dem Sinterpunkt der Keramik liegt, aber dennoch einen Wärmeausdehnungskoeffizienten im Bereich des WAK der Keramik hat.

In Fig. 4 ist eine weitere Ausführungsform einer erfindungsgemäßen Zahnrestauration 12 ersichtlich. Eine Krone 20 wird mit einer Krone 14 über das Verbindungsglied 26 verbunden. In diesem Ausführungsbeispiel ist das Verbindungsglied 26 im Bereich der Kaufläche angeordnet. Die Ausnehmungen 24 sind in ihrer Form an das Verbindungsglied 26 angenähert, weisen jedoch ein Übermaß auf. Bei dieser Ausführungsform kann das Verbindungsglied auch erst dann in die Ausnehmungen 24 eingesetzt werden, wenn die Kronen 14 und 20 bereits im Mund des Patienten oder im Modell zueinander ausgerichtet sind. Es ist bevorzugt, die Kaufläche anschließend mit einer weiteren Deckschicht abzudecken, während im übrigen das Sintern in gleicher Weise erfolgen kann, wie es oben beschrieben ist.

Gemäß einem alternativen Ausführungsbeispiel wurde anstelle der Glaspaste eine konventionelle Lötmasse, nämlich das Produkt INSTA-FRAC der Firma Ceramic Work, verwendet.

In beiden Fällen ist das Ergebnis nach dem Nachsinterbrand zufriedenstellend.

Es versteht sich, daß die Ausgestaltung in weiten Bereichen an die Erfordernisse anpaßbar ist. Beispielsweise kann anstelle der Verbindungsglieder mit abgerundeten Enden auch eine andere Ausgestaltung der Verbindungsglieder verwendet werden. Es ist auch möglich, das Verbindungsglied 26 in seiner Formgebung und Querschnittswahl an die Belastungssituation anzupassen. In diesem Zusammenhang empfiehlt sich ein hochovaler Querschnitt, also ein Querschnitt, dessen Ellipsenlängsachse in inzisal/gingivaler Richtung verläuft.

Erfindungsgemäß ist es ferner besonders günstig, wenn als Material für das Verbindungsglied 26 Zirkondioxid verwendet wird. Dieses Material ist noch härter als eine Lithiumdisilicatkeramik, so daß insofern eine Aussteifung der Brücke durch die erfindungsgemäßen Verbindungsglieder realisiert wird.

Bei einem letzten Ausführungsbeispiel ist es vorgesehen, das Verbindungsglied länger und größer auszubilden, so daß es sich durch den Brückenzahn hindurch erstreckt, und die Brücke zusätzlich aussteift, jedoch in an sich bekannter Weise über Glaspaste in den entsprechenden Ausnehmungen eingesintert wird.

## Patentansprüche

1. Keramische Zahnrestauration, mit zwei einander benachbarten Kronen- oder Brückenelementen und einem Verbindungsglied, das in Ausnehmungen in die Kronen- oder Brückenelemente einsteckbar ist, **dadurch gekennzeichnet, daß** das Verbindungsglied (26) über eine Glaspulverpaste oder -aufschlämmung in den Ausnehmungen (24) bei Temperaturen unter etwa 800°C eingesintert ist.

2. Zahnrestauration nach Anspruch 1, **dadurch gekennzeichnet, daß** die Ausnehmungen (24) in einander benachbarten medialen und distalen Flächen der Kronen- (14) oder Brückenelemente (16) ausgebildet sind.

3. Zahnrestauration nach Anspruch 2, **dadurch gekennzeichnet, daß** die Ausnehmungen (24) die mediale bzw. distale Wand der Krone (14) oder des Brückenelements (16) durchtreten.

4. Zahnrestauration nach Anspruch 1, **dadurch gekennzeichnet, daß** die Ausnehmungen (24) in der Kaufläche der benachbarten Kronen-(14) und/oder Brückenelemente (10) ausgebildet sind und sich über mindestens 20%, bevorzugt knapp die Hälfte der medial/distalen Länge der Krone (14), erstrecken.

5. Zahnrestauration nach einem der vorhergehenden Ansprüche, **dadurch gekennzeichnet, daß** die Verbindungsglieder (26) als Stifte oder Stäbe mit rechteckigem, zylindrischem oder ovalem Querschnitt ausgebildet sind und die Form der Ausnehmungen (24) an die Ausbildung der Verbindungsglieder (26) angepaßt ist.

6. Zahnrestauration nach einem der vorhergehenden Ansprüche, **dadurch gekennzeichnet, daß** die Ausnehmungen (24) ein Übermaß gegenüber dem Querschnitt der Stifte aufweisen und die benachbarten Kronen- (14) oder Brückenelemente (10) bei eingesetztem Verbindungsglied (26) vor dem Sintern der Paste oder Aufschlämmung in begrenztem Maße beweglich sind.

7. Zahnrestauration nach einem der vorhergehenden Ansprüche, **dadurch gekennzeichnet, das** ein Übermaß zwischen Ausnehmungen (24) und Verbindungsgliedern (26) an den bukkalen, labialen und gingivalen und ggf. den inzisalen Seiten des Verbindungsglieds (26) im wesentlichen gleich ist und insbesondere 3 bis 30, bevorzugt etwa 10% des Durchmessers des Verbindungsglieds (26) entspricht.

8. Zahnrestauration nach einem der vorhergehenden Ansprüche, **dadurch gekennzeichnet, daß** die Ausnehmungen in den Kronen-(14) oder Brückenelementen (10) durch Bohren oder Fräsen hergestellt sind.

9. Zahnrestauration nach einem der vorhergehenden Ansprüche, **dadurch gekennzeichnet, daß** die Verbindungsglieder (26) mit der Paste oder Aufschlämmung eingestrichen in die Ausnehmungen (24) eingesetzt sind.

10. Zahnrestauration nach einem der vorhergehenden Ansprüche, **dadurch gekennzeichnet, daß** die Glaspaste oder -aufschlämmung einen Wärmeausdehnungskoeffizienten aufweist, der in der Nähe desjenigen der Keramik liegt, und insbesondere ein Feldspatglas oder ein Lithiumdisilicat-Glas eingesetzt ist, und daß das Verbindungsglied (26) aus einem Metalloxid oder einer Metalloxidmischung besteht, die aus SiO₂, Al₂O₃ oder insbesondere ZrO₂ ausgewählt ist.

11. Verfahren zur Herstellung einer keramischen Zahnrestauration, bei welchem ein Verbindungsglied in Ausnehmungen in zwei benachbarten Kronen- oder Brückenelementen gesteckt wird, **dadurch gekennzeichnet, daß** ein Zwischenraum zwischen dem Verbindungsglied und der Ausnehmung mit einer Glaspaste oder -aufschlämmung versehen wird, die korrekte Positionierung durch Einsetzen in das Modell festgestellt wird, die Geometrie fixiert wird und die Glasmasse durch Erhitzen der Zahnrestauration bei Temperaturen unter etwa 800°C geschmolzen wird und nach Abkühlen und Aushärten die Kronen über das Verbindungsglied steif miteinander verbindet.

12. Verfahren zur Herstellung einer keramischen Zahnrestauration, bei welchem ein Verbindungsglied in Ausnehmungen in zwei benachbarten Kronen- oder Brückenelementen gesteckt wird, **dadurch gekennzeichnet, daß** ein Zwischenraum zwischen dem Verbindungsglied und der Ausnehmung mit einer Glaspaste oder -aufschlämmung versehen wird, die korrekte Positionierung durch Einsetzen in den Mund des Patienten festgestellt wird, die Geometrie fixiert wird und die Glas masse durch Erhitzen der Zahnrestauration geschmolzen wird und nach Abkühlen und Aushärten die Kronen über das Verbindungsglied steif miteinander verbindet.

13. Verfahren nach Anspruch 11 oder 12, **dadurch gekennzeichnet, daß** das Erhitzen der Zahnrestauration über weniger als etwa 3 Minuten, insbesondere etwa 1 Minute, erfolgt, und die Temperatur für das Erhitzen weniger als 800°C und insbesondere etwa 640 bis 740°C beträgt.

## Claims

1. A ceramic dental restoration with two adjacent crown or bridge elements and a connecting member which can be inserted into recesses in the crown or bridge elements, **characterised in that** the connecting member (26) is sintered in the recesses (24) by way of a glass powder paste or slurry at temperatures below approximately 800°C.

2. A dental restoration according to Claim 1, **characterised in that** the recesses (24) are formed in mutually adjacent medial and distal surfaces of the crown elements (14) or bridge elements (16).

3. A dental restoration according to Claim 2, **characterised in that** the recesses (24) pass through the medial or distal wall of the crown (14) or of the bridge element (16) respectively.

4. A dental restoration according to Claim 1, **characterised in that** the recesses (24) are formed in the masticatory surface of the adjacent crown elements (14) and/or bridge elements (10) and they extend over at least 20 %, preferably almost half the medial/distal length of the crown (14).

5. A dental restoration according to any one of the preceding Claims, **characterised in that** the connecting members (26) are in the form of pins or rods of rectangular, cylindrical or oval cross-section, and the shape of the recesses (24) is adapted to the configuration of the connecting members (26).

6. A dental restoration according to any one of the preceding Claims, **characterised in that** the recesses (24) are oversized with respect to the cross-section of the pins and the adjacent crown elements (14) or bridge elements (10) are movable to a limited extent with the connecting member (26) inserted before the sintering of the paste or slurry.

7. A dental restoration according to any one of the preceding Claims, **characterised in that** an oversize between recesses (24) and connecting members (26) is substantially equal on the buccal, labial and gingival and, optionally, the incisal sides of the connecting member (26) and, in particular, corresponds to 3 to 30, preferably approximately 10 %, of the diameter of the connecting member (26).

8. A dental restoration according to any one of the preceding Claims, **characterised in that** the recesses in the crowns (14) or bridge elements (10) are produced by drilling or milling.

9. A dental restoration according to any one of the preceding Claims, **characterised in that** the connecting members (26) are inserted into the recesses (24) with the paste or slurry applied.

10. A dental restoration according to any one of the preceding Claims, **characterised in that** the glass paste or glass slurry has a coefficient of thermal expansion which is in the vicinity of that of the ceramic, and in particular a feldspar glass or a lithium disilicate glass is used, and **in that** the connecting member (26) consists of a metal oxide or a metal oxide mixture which is chosen from SiO₂, Al₂O₃ or, in particular, ZrO₂.

11. A method of producing a ceramic dental restoration, in which a connecting member is inserted into recesses in two adjacent crown or bridge elements, **characterised in that** a space between the connecting member and the recess is provided with a glass paste or slurry, the correct positioning is established by insertion into the pattern, the geometry is fixed and the glass material is melted by heating the dental restoration at temperatures below approximately 800°C and after cooling and curing the crowns are rigidly joined together via the connecting member.

12. A method for producing a ceramic dental restoration, in which a connecting member is inserted into recesses in two adjacent crown or bridge elements, **characterised in that** a space between the connecting member and the recess is provided with a glass paste or slurry, the correct positioning is established by insertion into the patient's mouth, the geometry is fixed and the glass material is melted by heating the dental restoration and after cooling and curing the crowns are rigidly joined together via the connecting member.

13. A method according to Claim 11 or 12, **characterised in that** the heating of the dental restoration is effected over less than approximately 3 minutes, in particular approximately 1 minute, and the heating temperature is lower than 800°C and, in particular, approximately 640°C to 740°C.

## Revendications

1. Restauration dentaire en céramique, comprenant deux éléments de couronne ou de bridge adjacents et un élément d'assemblage, qui peut être inséré dans des évidements réalisés dans les éléments de couronne ou de bridge, **caractérisée en ce que** l'élément d'assemblage (26) est fritté, au moyen d'une pâte ou d'une suspension de verre pulvérisé, dans les évidements (24) à des températures inférieures à environ 800°C.

2. Restauration dentaire selon la revendication 1, **caractérisée en ce que** les évidements (24) sont réalisés dans des surfaces mésiales et distales adjacentes des éléments de couronne (14) ou de bridge (16).

3. Restauration dentaire selon la revendication 2, **caractérisée en ce que** les évidements (24) traversent la paroi mésiale ou distale de la couronne (14) ou de l'élément de bridge (16).

4. Restauration dentaire selon la revendication 1, **caractérisée en ce que** les évidements (24) sont réalisés dans la surface occlusale des éléments de couronne (14) et/ou de bridge (10) adjacents et **en ce qu'**ils s'étendent sur au moins 20%, de préférence juste sur la moitié de la longueur mésiale/distale de la couronne (14).

5. Restauration dentaire selon l'une quelconque des revendications précédentes, **caractérisée en ce que** les éléments d'assemblage (26) sont réalisés sous forme de tiges ou de bâtonnets à section rectangulaire, cylindrique ou ovale, et **en ce que** la forme des évidements (24) est adaptée au profil des éléments d'assemblage (26).

6. Restauration dentaire selon l'une quelconque des revendications précédentes, **caractérisée en ce que** les évidements (24) présentent un surdimensionnement par rapport à la section des tiges, et **en ce qu'**une fois que l'élément d'assemblage (26) a été inséré, les éléments de couronne (14) et/ou de bridge (10) adjacents sont mobiles dans une moindre mesure avant le frittage de la pâte ou de la suspension.

7. Restauration dentaire selon l'une quelconque des revendications précédentes, **caractérisée en ce qu'**un surdimensionnement entre les évidements (24) et les éléments d'assemblage (26) au niveau des faces buccale, labiale et gingivale, et éventuellement incisale, de l'élément d'assemblage (26), est essentiellement régulier et correspond en particulier de 3% à 30%, de préférence à environ 10% du diamètre de l'élément d'assemblage (26).

8. Restauration dentaire selon l'une quelconque des revendications précédentes, **caractérisée en ce que** les évidements dans les couronnes (14) ou dans les éléments de bridge (10) sont réalisés par perçage ou par fraisage.

9. Restauration dentaire selon l'une quelconque des revendications précédentes, **caractérisée en ce que** les éléments d'assemblage (26) sont insérés dans les évidements (24) après avoir été revêtus avec la pâte ou la suspension.

10. Restauration dentaire selon l'une quelconque des revendications précédentes, **caractérisée en ce que** la pâte ou la suspension de verre présente un coefficient de dilatation thermique qui est proche de celui de la céramique, et en particulier **en ce que** l'on met en oeuvre un verre feldspathique ou un verre au disilicate de lithium, et **en ce que** l'élément d'assemblage (26) est composé d'un oxyde métallique ou d'un mélange d'oxydes métalliques qui est choisi parmi SiO₂, Al₂O₃ ou, en particulier, ZrO₂.

11. Procédé de fabrication d'une restauration dentaire en céramique, dans lequel un élément d'assemblage est inséré dans des évidements de deux éléments de couronne ou de bridge adjacents, **caractérisé en ce qu'**un espace entre l'élément d'assemblage et l'évidement est rempli d'une pâte ou d'une suspension de verre, **en ce que** le positionnement correct est déterminé par insertion dans le modèle, **en ce que** la géométrie est fixée et **en ce que** la masse de verre est fondue par chauffage de la restauration dentaire à des températures inférieures à environ 800°C et **en ce qu'**après refroidissement et durcissement, les couronnes sont reliées de manière rigide les unes aux autres par l'intermédiaire de l'élément d'assemblage.

12. Procédé de fabrication d'une restauration dentaire en céramique, dans lequel un élément d'assemblage est inséré dans des évidements de deux éléments de couronne ou de bridge adjacents, **caractérisé en ce qu'**un espace entre l'élément d'assemblage et l'évidement est rempli d'une pâte ou d'une suspension de verre, **en ce que** le positionnement correct est déterminé par insertion dans la bouche du patient, **en ce que** la géométrie est fixée et **en ce que** la masse de verre est fondue par chauffage de la restauration dentaire et **en ce qu'**après refroidissement et durcissement, les couronnes sont reliées de manière rigide les unes aux autres par l'intermédiaire de l'élément d'assemblage.

13. Procédé selon la revendication 11 ou 12, **caractérisé en ce que** le chauffage de la restauration dentaire dure moins de 3 minutes environ, en particulier environ 1 minute, et **en ce que** la température pour le chauffage est inférieure à environ 800°C et en particulier d'environ 640°C à 740°C.
